# FASCICULE DE BREVET EUROPEEN

(11) **EP 0 569 282 B1**
(45) Date de publication et mention de la délivrance du brevet: **02.10.1996**
(21) Numéro de dépôt: 93401141.2
(22) Date de dépôt: 04.05.1993
(51) Int. Cl.: F16L 37/32

(54) **Dispositif de connexion rapide pour fluide**
Schnellverbindung für Fluide
Quick connect fluid coupling

(30) Priorité: 07.05.1992 FR 9205661
(43) Date de publication de la demande: 10.11.1993
(73) Titulaire: RENAULT AUTOMATION, F-92109 Boulogne-Billancourt (FR)
(72) Inventeur: Daulon, Jean-Louis, F-81100 Castres (FR)
(74) Mandataire: Ernst-Schonberg, Michel

(56) Documents cités:
- US-A- 3 163 178
- US-A- 3 267 963
- US-A- 4 583 711

## Description

La présente invention se rapporte à un dispositif de connexion rapide pour fluide entre une première et une seconde pièces mobiles l'une par rapport à l'autre suivant un axe, conformément au préambule de la revendication.

La publication US-A-3.163.178 décrit un dispositif de connexion dans lequel un premier clapet obturateur est en appui sur le siège d'un élément de connexion sous l'effet conjugué de la pression d'un ressort tandisque l'autre clapet repose sur son siège sous l'action de la force de rappel exercée par un ressort antagoniste plus puissant.

Le dispositif précité utilise un manchon extérieur de verrouillage et d'étanchéité.

L'invention a pour objet un dispositif de connexion étanche simplifié qui assure l'enlèvement des impuretés sur les parties étanches en contact au cours de l'établissement de ladite connexion.

L'invention vise par ailleurs un dispositif de connexion pour fluide acceptant des défauts d'alignement tout en assurant l'étanchéité nécessaire.

L'objet et avantages précités sont satisfaits conformément à la caractéristique de la revendication.

Grâce à cette structure particulièrement simple des deux têtes, l'obturateur sur la première pièce reliée au conduit d'arrivée de fluide est soulevé de son siège par l'autre obturateur, avant l'entrée en contact des deux surfaces d'étanchéité, de sorte que les surfaces d'étanchéité des deux têtes sont nettoyées par le fluide s'échappant de la tête de la première pièce avant l'entrée en contact de ces surfaces d'étanchéité. Par une conformation appropriée des obturateurs et des sièges des deux têtes, il est possible de faire en sorte qu'une faible course des deux pièces l'une par rapport à l'autre soit suffisante pour dégager un passage convenable pour le fluide.

De préférence, l'obturateur de chaque tête est constitué par une bille et le siège de chaque tête est constitué par un siège conique.

Afin de permettre au dispositif de connexion d'accepter des désalignements angulaires des deux deux pièces tout en assurant une bonne étanchéité, il est avantageux que l'un au moins des deux éléments de connexion formant siège et surface d'étanchéité soit monté mobile de façon limitée à la manière d'une rotule dans la pièce correspondante.

Chaque pièce présente avantageusement un logement cylindrique et l'élément de connexion formant siège et surface d'étanchéité est de préférence réalisé en forme de godet avec une surface extérieure sphérique convexe en contact avec la surface cylindrique du logement. Dans ce cas, l'élément monté mobile à la manière d'une rotule peut être sollicité par un ressort contre une butée, en opposition au mouvement de recul son obturateur à l'encontre de son ressort de rappel.

Chaque bille formant obturateur est de préférence sollicitée par son ressort de rappel par l'intermédiaire d'un poussoir guidé par la surface intérieure cylindrique de l'élément en forme de godet, pour assurer le centrage de la bille par rapport à cet élément.

Dans ce cas, dans la première pièce, ledit poussoir de la bille limite la course de recul de cette bille en prenant appui sur une butée.

Le poussoir guidé dans l'élément en forme de godet est avantageusement échancré ou évidé de manière à laisser passer le fluide.

En se référant aux dessins schématiques annexés, on va décrire ci-après plus en détail un mode de réalisation illustratif et non limitatif d'un dispositif de connexion conforme à l'invention; sur les dessins:
la figure 1 est une coupe du dispositif de connexion entre deux pièces mobiles l'une par rapport à l'autre;
les figures 2a à 2d représentent plusieurs phases du cycle d'établissement de la connexion entre lesdites deux pièces.

Tel qu'illustré par les dessins, un dispositif de connexion 1 est destiné à établir une connexion de fluide entre une première pièce 2 à laquelle est relié un conduit d'arrivée de fluide 3 et une seconde pièce 4 à laquelle est relié un conduit de départ de fluide 5. Dans l'exemple représenté, la pièce 2 est fixe et la pièce 4 est mobile par rapport à la pièce 2 suivant un axe, une flèche double 6 symbolisant la mobilité de la pièce 4 par rapport à la pièce 2, en vue de la connexion et de la déconnexion des deux pièces.

Chacune des deux pièces 2 et 4 porte une tête de connexion 7 faisant saillie en direction de l'autre pièce.

Sur chacune des pièces 2 et 4, la tête de connexion 7 comprend un élément de connexion 8 en forme de godet, une bille 9 formant obturateur, un poussoir 10 et un ressort de rappel.

L'élément 8 en forme de godet est percé dans son fond d'un trou conique 10 formant siège pour la bille 9. Extérieurement, le fond de l'élément 8 est plat et forme une surface annulaire plane 11. La surface latérale extérieure de l'élément 8 comprend une portion cylindrique 12 s'étendant depuis le fond à peu près jusqu'à mi-hauteur de l'élément 8, et une portion 13 bombée sphérique, centrée sur l'axe de l'élément 8. Cette portion bombée 13 comporte une gorge périphérique 14 renfermant un joint torique 15.

Les éléments 8 en forme de godet sont retenus dans les deux pièces 2 et 4 par des rondelles 16 fixées par exemple à l'aide de vis non représentées aux pièces 2 et 4.

Sur la pièce 2, l'élément 8 en forme de godet est fixé rigidement dans un logement cylindrique 17 dont la profondeur est égale à la hauteur de la portion bombée 13 de l'élément 8, de sorte que l'élément 8 se trouve bloqué par la rondelle 16 contre un épaulement 18 du logement 17.

Au contraire, sur la pièce 4, l'élément 8 en forme de godet est monté dans un logement 19 cylindrique de profondeur supérieure à la hauteur de la portion sphérique 13 de l'élément 8. Ce logement 19 est ici un trou de passage obturé à son extrémité opposée par un couvercle 20. Un ressort de compression 21 est intercalé entre le couvercle 20 et l'élément 8 en forme de godet. Compte tenu du jeu de la portion cylindrique 12 de l'élément 8 en forme de godet dans la rondelle 16, l'élément 8 est mobile à la manière d'une rotule et mobile axialement à l'encontre du ressort 21 dans la pièce 4.

Aussi bien dans la pièce 2 que dans la pièce 4, la bille 9 est poussée contre son siège 10 par un poussoir 22 guidé par la surface latérale intérieure cylindrique de l'élément 8, chaque poussoir étant creusé en cuvette 23 dans sa partie en contact avec la bille 9 et étant échancré en 27 pour permettre le passage du fluide entre lui-même et l'élément 8 en forme de godet.

Le poussoir 22 pour la bille 9 de la pièce 2 est soumis à l'action d'un ressort de rappel 24 et le poussoir 22 pour la bille 9 de la pièce 4 à l'action d'un ressort 25, le ressort 25 étant plus puissant que le ressort 24.

Il est à noter par ailleurs que le poussoir 22 coopère, dans la pièce 2, avec une butée 26 qui limite la course de recul de la bille 9 par rapport à son siège 10, à l'encontre de l'action du ressort 24. Cette butée de course est choisie de telle manière que la bille 9 qui, en position déconnectée, lorsqu'elle est appliquée contre son siège 10, dépasse légèrement la surface extérieure plane 11 de l'élément 8 en forme de godet, puisse reculer au maximum jusqu'à se trouver dans le plan de ladite surface 11.

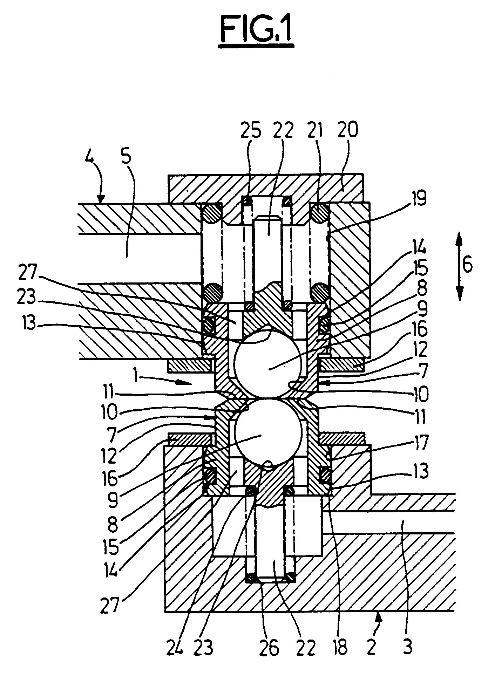

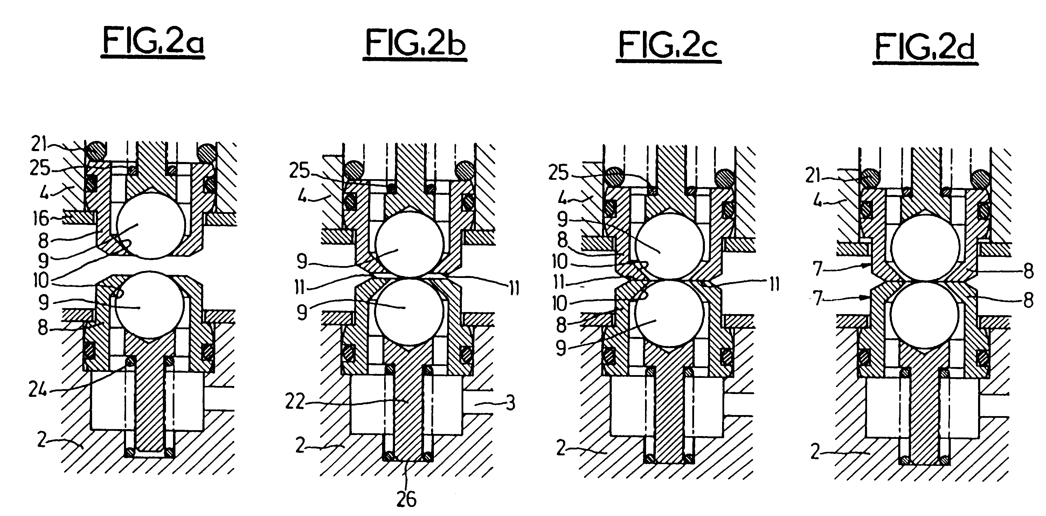

En se référant aux figures 2a à 2d, on va décrire ci-après un cycle de connexion du dispositif suivant la figure 1.

Selon la figure 2a, à l'état déconnecté du dispositif, lorsque les deux pièces 2 et 4 sont écartées l'une de l'autre, la bille 9 de la pièce 2 est appliquée par le ressort 24 contre son siège 10. De façon correspondante, dans la pièce 4, la bille 9 est appliquée par son ressort 25 contre le siège 10 de son élément 8 lui-même appliqué par son ressort 21 contre la rondelle 16.

Selon la figure 2b, lorsque les deux pièces 2 et 4 sont rapprochées l'une de l'autre et que les deux billes 9 se rencontrent, la bille 9 de la pièce 4, sollicitée par son ressort 25 plus puissant, repousse d'abord la bille 9 de la pièce 2 de son siège, permettant ainsi un échappement de fluide provenant du conduit d'arrivée 3. Cet échappement de fluide assure un auto-nettoyage du dispositif de connexion à l'endroit des surfaces d'étanchéité 11 planes. Le mouvement de recul de la bille 2 de la pièce 2 est limité par l'entrée en contact de son poussoir 22 avec la butée 26.

Selon la figure 2c, la poursuite du mouvement de rapprochement des deux pièces 2 et 4 provoque ensuite, sur la pièce 4, une séparation de la bille 9 du siège 10 de son élément 8 en forme de godet, à l'encontre de l'action du ressort 25, jusqu'à l'entrée en contact des surface d'étanchéité 11 annulaire des deux éléments 8 en forme de godet.

Selon la figure 2d, le rapprochement ultérieur des deux pièces 2 et 4 provoque un recul de l'élément 8 en forme de godet de la pièce 4, à l'encontre de l'action du ressort 21. Ce recul peut être accompagné d'un mouvement de rotule de l'élément 8 dans la pièce 4, en cas de désalignement angulaire des deux têtes de connexion 7 montées sur les pièces 2 et 4.

Il est à noter que l'étanchéité par contact des surfaces 11 des deux éléments 8 en forme de godet, sous l'action du ressort 21, est renforcée par un effet d'autoclave dû à la différence des sections et des pressions aux deux extrémités des l'éléments 8 en forme de godet. En effet, dans la mesure où, à l'état connecté, la pression de fluide agit sur la section plus grande de chaque élément 8 et une pression inférieure, généralement la pression atmosphérique, agit sur sa section plus petite, chaque élément 8 sera sollicitée, par une force qui est fonction de cette différente de pression et cette différence de section, en direction de l'élément 8 opposée, cette force s'ajoutant à l'effort d'appui des surfaces 11 des deux éléments 8 l'une contre l'autre sous l'effet du ressort 21.

Il va de soi que la description ci-dessus n'a été donnée qu'à titre d'exemple illustratif et non limitatif et que de nombreuses modifications et variantes sont possibles dans le cadre de l'invention.

Ainsi, les billes pourraient être replacées par des obturateurs de forme différente, ce qui impliquerait bien entendu des sièges également de forme différente. De plus, le montage à rotule de l'un au moins des éléments 8 en forme de godet dans l'une au moins des deux pièces 2 et 4 n'est pas absolument indispensable, mais constitue néanmoins un mode de réalisation préféré lorsqu'il s'agit de compenser d'éventuels désalignements angulaires.

Les applications du dispositif de connexion conforme à l'invention sont multiples et comprennent, outre les machines-outils, par exemple l'alimentation en liquide de coupe de parties mobiles de machines-outils, toutes les connexions de fluide automatiques entre deux pièces mobiles, moyennant une course très faible.

## Revendications

1. Dispositif de connexion rapide pour fluide entre une première et une seconde pièces (2, 4) qui sont mobiles l'une par rapport à l'autre suivant un axe et auxquelles sont raccordés respectivement un conduit d'arrivée de fluide (3) et un conduit de départ de fluide (5), ce dispositif comprenant deux têtes (7) montées respectivement sur la première et sur la seconde pièces et dans lequel l'une et l'autre tête (7) possèdent un clapet de retenue avec un obturateur (9) appliqué contre un siège (10) par un ressort de rappel (24, 25), en position déconnectée et limité extérieurement par une surface annulaire d'étanchéité (11) de telle manière qu'en position déconnectée, l'obturateur (9) de chaque tête, en contact avec son siège (10), dépasse vers l'extérieur la surface d'étanchéité (11) de son élément de connexion (8) en direction de l'autre tête, et qu'en position connectée, les deux obturateurs (9) en appui l'un contre l'autre étant soulevés de leurs sièges (10), les surfaces d'étanchéité (11) des éléments de conncxion (8) des deux têtes se trouvent en contact l'une avec l'autre et, que le ressort de rappel (25) de l'obturateur (9) sur la seconde pièce (4) est plus puissant que le ressort de rappel (24) de l'obturateur (9) de la tête (7) monté sur la première pièce (2), les deux têtes (7) étant identiques et constituées par un élément de connexion possédant une configuration intérieure en forme de siège (10) pour l'obturateur (9) et la course de recul, par rapport à son siège, de l'obturateur (9) sur la première pièce (2) étant limitée de manière que cet obturateur, lorsque les deux obturateurs sont en appui l'un contre l'autre, ne puisse reculer que jusqu'au plan de la surface d'étanchéité (11) de son élément de connexion (8).

2. Dispositif suivant la revendication 1, caractérisé par le fait que l'un au moins desdits deux éléments de connexion (8) est monté mobile à la manière d'une rotule dans sa pièce (2, 4).

3. Dispositif suivant la revendication 2, caractérisé par le fait que la pièce (4) présente un logement cylindrique (19) et que l'élément de connexion (8) présente une surface extérieure sphérique (13) en contact avec la surface du logement cylindrique (19).

4. Dispositif suivant la revendication 3, caractérisé par le fait que l'élément de connexion (8) est sollicité par un ressort (21) contre une butée (16) en opposition au mouvement de recul de son obturateur (9) à l'encontre de son ressort de rappel (25).

5. Dispositif suivant l'une quelconque des revendications 3 ou 4, caractérisé par le fait que chaque bille (9) est sollicitée par son ressort de rappel (24, 25) par l'intermédiaire d'un poussoir (22) guidé dans l'élément de connexion (8) pour assurer le centrage de la bille (9) par rapport à cet élément.

6. Dispositif suivant la revendication 5, caractérisé par le fait que le poussoir (22) de la bille (9) de la tête de connexion (7) montée sur la première pièce (2) limite la course de recul de cette bille (9) en prenant appui sur une butée (26).

7. Dispositif suivant l'une quelconque des revendications 5 ou 6, caractérisé par le fait que chaque poussoir (22) est échancré (27) de manière à laisser passer le fluide.

## Patentansprüche

1. Schnellverbindung für Fluide zwischen einem ersten und einem zweiten Teil (2, 4), die relativ zueinander entlang einer Achse beweglich sind und an die eine Zufuhrleitung (3) bzw. eine Abfuhrleitung (5) angeschlossen sind, wobei die Verbindung zwei Kopfteile (7) am ersten bzw. am zweiten Teil aufweist und jedes Kopfteil (7) ein Rückschlagventil mit einem Verschlußteil (9) enthält, daß unter der Einwirkung einer Rückholfeder (24, 25) an einem Sitz (10) anliegt in der Freigabestellung und das nach außen hin durch eine ringförmige Dichtfläche (11) derart begrenzt ist, daß in der Freigabestellung das Verschlußteil (9) eines jeden Kopfteils bei Berührung mit seinem Sitz (10) aus der Dichtfläche (11) seines Verbindungselementes (8) nach außen in Richtung zum anderen Kopfteil hin herausragt und daß in der Eingriffsstellung die beiden sich aufeinander abstützenden Verschlußteile (9) von ihren Sitzen (10) abgehoben sind, so daß die Dichtflächen (11) der Verbindungselemente (8) der beiden Kopfteile einander berühren; die Rückholfeder (25) des Verschlußteiles (9) am zweiten Teil 4 ist stärker als die Rückholfeder (24) des Verschlußteils (9) am ersten Teil (2); die beiden Kopfteile (7) sind identisch und bestehen aus einem Verbindungselement mit einer Innengestaltung in Form eines Sitzes (10) für das Verschlußteil (9); der Rückzugsweg, relativ zum Sitz, des Verschlußteiles (9) am ersten Teil (2) ist derart begrenzt, daß das Verschlußteil, wenn sich die beiden Verschlußteile aufeinander abstützen, nur bis zur Ebene der Dichtfläche (11) ihres Verbindungselementes (8) zurückziehen kann.

2. Verbindung nach Anspruch 1, dadurch gekennzeichnet, daß wenigstens eins der beiden Verbindungselemente (8) beweglich nach Art eines Kugelgelenkes in ihrem Teil (2, 4) angeordnet ist.

3. Verbindung nach Anspruch 2, dadurch gekennzeichnet, daß das Teil (4) eine zylindrische Aussparung (19) aufweist und daß das Verbindungselement (8) eine äußere kugelförmige Fläche (13) aufweist, welche die Fläche der zylindrischen Aussparung (19) berührt.

4. Verbindung nach Anspruch 3, dadurch gekennzeichnet, daß das Verbindungselement (8) von einer Feder (21) gegen einen Anschlag (16) beaufschlagt wird entgegen der Rückzugsbewegung des Verschlußteils (9) aufgrund dessen Rückholfeder (25).

5. Verbindung nach einem der Ansprüche 3 oder 4, dadurch gekennzeichnet, daß jede Kugel (9) von ihrer Rückholfeder (24, 25) über ein Druckteil (22) beaufschlagt wird, welches im Verbindungselement (8) geführt ist, um eine Zentrierung der Kugel (9) bezüglich dieses Elementes zu gewährleisten.

6. Verbindung nach Anspruch 5, dadurch gekennzeichnet, daß das Druckteil (22) für die Kugel (9) des Kopfteils (7) am ersten Teil (2) den Rückzugsweg dieser Kugel (9) durch Abstützung auf einem Anschlag (26) begrenzt.

7. Verbindung nach einem der Ansprüche 5 oder 6, dadurch gekennzeichnet, daß jedes Druckteil (22) derart abgetragen ist (27), daß das Fluid passieren kann.

## Claims

1. A rapid fluid coupling device between a first and a second member (2, 4) which are movable with respect to one another along an axis and to which a fluid inlet duct (3) and a fluid outlet duct (5) are respectively connected, this device comprising two heads (7) mounted respectively on the first and second members and in which both heads (7) comprise a retaining valve with a shutter (9) applied against a seat (10) by a recall spring (24, 25) in the uncoupled position and limited externally by an annular sealing surface (11) so that in the uncoupled position, the shutter (9) of each head, in contact with its seat (10), projects externally beyond the sealing surface (11) of its coupling member (8) in the direction of the other head and so that in the coupled position, as the two shutters (9) bearing against one another are raised from their seats (10), the sealing surfaces (11) of the coupling members (8) of the two heads are in contact with one another and in which the recall spring (25) of the shutter (9) of the second member (4) is more powerful than the recall spring (24) of the shutter (9) of the head (7) mounted on the first member (2), the two heads (7) being identical and formed by a coupling member having an inner configuration in the form of a seat (10) for the shutter (9) and the return stroke, with respect to its seat, of the shutter (9) on the first member (2) being limited such that this shutter, when the two shutters bear on one another, can return only as far as the plane of the sealing surface (11) of its coupling member (8).

2. A device as claimed in claim 1, characterised in that at least one of the two coupling members (8) is mounted to move in the manner of a toggle joint in its member (2, 4).

3. A device as claimed in claim 2, characterised in that the member (4) has a cylindrical housing (19) and in that the coupling member (8) has a spherical outer surface (13) in contact with the surface of the cylindrical housing (19).

4. A device as claimed in claim 3, characterised in that the coupling member (8) is urged by a spring (21) against a stop member (16) in opposition to the return movement of its shutter (9) against its recall spring (25).

5. A device as claimed any one of claims 3 or 4, characterised in that each ball (9) is urged by its recall spring (24, 25), via a push member (22) guided in the coupling member (8), in order to ensure that the ball (9) is centred with respect to this member.

6. A device as claimed in claim 5, characterised in that the push member (22) of the ball (9) of the coupling head (7) mounted on the first member (2) limits the return stroke of this ball (9) by bearing on a stop member (26).

7. A device as claimed in any one of claims 5 or 6, characterised in that each push member (22) is notched (27) in order to allow the passage of the fluid.
